(19) **Europäisches Patentamt / European Patent Office / Office européen des brevets**

(11) **EP 2 130 290 B1**

(12) **FASCICULE DE BREVET EUROPEEN**

(45) Date de publication et mention de la délivrance du brevet:
**06.12.2017 Bulletin 2017/49**

(21) Numéro de dépôt: **08775634.2**

(22) Date de dépôt: **07.03.2008**

(51) Int Cl.:
**H02M 3/158** (2006.01)     **H02M 1/12** (2006.01)

(86) Numéro de dépôt international:
**PCT/FR2008/000299**

(87) Numéro de publication internationale:
**WO 2008/132318 (06.11.2008 Gazette 2008/45)**

(54) **DISPOSITIF DE FILTRAGE ACTIF POUR UNE ALIMENTATION DE PUISSANCE**

AKTIVFILTERUNGSVORRICHTUNG FÜR EIN NETZTEIL

ACTIVE FILTERING DEVICE FOR A POWER SUPPLY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.03.2007 FR 0701785**

(43) Date de publication de la demande:
**09.12.2009 Bulletin 2009/50**

(73) Titulaires:
- **Centre National de la Recherche Scientifique**
  **75016 Paris (FR)**
- **Institut National Polytechnique de Lorraine**
  **54501 Vandoeuvre-les-Nancy (FR)**
- **Universite Henri Poincare**
  **54003 Nancy Cedex (FR)**

(72) Inventeurs:
- **MARTIN, Jean-Philippe**
  **54600 Villers-les-nancy (FR)**
- **PIERFEDERICI, Serge Lionel**
  **F-54840 Velaine-en-haye (FR)**
- **DAVAT, Bernard**
  **F-54000 Nancy (FR)**
- **MEIBODY-TABAR, Farid**
  **54600 Villers-les-nancy (FR)**

(74) Mandataire: **Gevers & Orès**
  **41 avenue de Friedland**
  **75008 Paris (FR)**

- **TRIPATHI R K ET AL: "High power low distortion switch mode rectifier" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001, ANNUAL POWER ELECTRONICS SPECIALISTS CONFERENCE, NEW YORK, NY : IEEE, US, vol. VOL. 1 OF 4. CONF. 32, 17 juin 2001 (2001-06-17), pages 701-706, XP010559311 ISBN: 0-7803-7067-8**
- **ISHII T ET AL: "Power factor correction using interleaving technique for critical mode switching converters" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, vol. 1, 17 mai 1998 (1998-05-17), pages 905-910, XP010294961 ISBN: 0-7803-4489-8**
- **GORAN STOJCIC ET AL: "A SOFT-SWITCHING BIDIRECTIONAL CONVERTER FOR THE SPACE STATION UNINTERRUPTIBLE POWER SUPPLY" AEROSPACE POWER, CONVERSION TECHNOLOGY, ELECTROCHEMICAL CONVERSION. ATLANTA, AUG. 8 - 13, 1993, PROCEEDINGS OF THE INTERSOCIETY ENERGY CONVERSION ENGINEERING CONFERENCE (IECEC), NEW YORK, IEEE, US, vol. VOL. 1 CONF. 28, 8 août 1993 (1993-08-08), pages 1267-1272, XP000428311**

(56) Documents cités:
**EP-A- 0 951 133**

EP 2 130 290 B1

- YU-KANG LO ET AL: "A new control method for single-phase active power line conditioners" APPLIED POWER ELECTRONICS CONFERENCE AND EXPOSITION, 1999. APEC '99. FOURTEENTH ANNUAL DALLAS, TX, USA 14-18 MARCH 1999, PISCATAWAY, NJ, USA,IEEE, US, vol. 2, 14 mars 1999 (1999-03-14), pages 1150-1152, XP010323594 ISBN: 0-7803-5160-6
- CHONGMING QIAO ET AL: "A comprehensive analysis and design of a single phase active power filter with unified constant-frequency integration control" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001, ANNUAL POWER ELECTRONICS SPECIALISTS CONFERENCE, NEW YORK, NY : IEEE, US, vol. VOL. 1 OF 4. CONF. 32, 17 juin 2001 (2001-06-17), pages 1619-1625, XP010559460 ISBN: 0-7803-7067-8

**EP 2 130 290 B1**

## Description

La présente invention a pour objet un dispositif de filtrage actif pour une alimentation de puissance en courant continu comportant une source, un convertisseur de puissance uni ou bi-directionnel, et une charge.

Les dispositifs de filtrage actif connus compensent uniquement les harmoniques de courant basses fréquences du réseau d'alimentation, et ne permettent donc pas d'éliminer les harmoniques hautes fréquences du courant générés par le découpage des interrupteurs de puissance.

De tels dispositifs sont décrits par exemple dans l'article de M. C. BENHABIB et S. SAADATE intitulé "New control approach for four-wire active power filter based on the use of synchronous reference frame" paru dans Electric Power Systems Research, vol. 73, n° 3, pp. 353-362, (Mars 2005) ou bien dans l'article de S. SAADATE et S. H. SHAHALAMI "Filtrage hybride des harmoniques engendrés par une charge fortement polluante - Application des algorithmes génétiques pour la boucle de contrôle" paru dans Revue Internationale de Génie Electrique, vol. 6, n° 1-2, pp. 143-166 (Avril 2003)

Un convertisseur de charge est ici défini comme une structure de puissance à absorption continue de courant (exemples : hacheur élévateur et ses variantes, hacheur à stockage capacitif et ses variantes...) possédant un nombre fini de séquences de fonctionnement et susceptible de fonctionner de manière unidirectionnelle (courant circulant de la source vers la charge ou bien en sens inverse) ou bidirectionnelle. L'article de R. K. TRIPATHI et al. intitulé "High power low distortion switch mode rectifier" paru dans PESC 2001, vol. 1, pp. 701-706, XP10559311 (Juin 2001) décrit un dispositif de filtrage actif pour une alimentation de puissance comportant un convertisseur de puissance, le dispositif de filtrage comportant un convertisseur de filtrage actif pour générer en sortie un courant de compensation des harmoniques du courant de source dues au découpage, en réponse en entrée à un signal représentatif du découpage du convertisseur de puissance. La présente invention a pour but de proposer un filtre actif pour le filtrage des harmoniques hautes fréquences du courant générés par le découpage des interrupteurs de puissance du convertisseur de charge, le filtre actif ayant un encombrement réduit et un meilleur rendement. L'idée de base de l'invention est de commander un filtre actif générant un courant de compensation, à partir d'un signal de découpage du convertisseur de puissance.

Le dispositif fonctionne quel que soit le signe du courant et peut être utilisé lorsque la source fournit de l'énergie à la charge et/ou lorsque la charge fournit de l'énergie à la source (séquence de récupération ou charge de batterie par exemple).

L'invention concerne en particulier un dispositif de filtrage actif pour une alimentation de puissance comportant une source ayant un courant de source, un convertisseur de puissance présentant une inductance d'entrée L, un interrupteur de puissance commandé par un signal de découpage, et délivrant une tension de sortie $V_S$, et une charge, le dispositif comportant un convertisseur de filtrage actif ayant une entrée pour recevoir un signal de découpage du convertisseur de puissance, pour générer en sortie un courant de compensation des harmoniques du courant de source dus au découpage, en réponse en entrée à un signal représentatif du découpage du convertisseur de puissance.

Le dispositif proposé est un dispositif de filtrage actif qui se connecte en parallèle entre une source d'énergie et une charge. En filtrant les harmoniques de courant absorbés par la charge, ce dispositif permet une diminution de la taille de l'inductance L d'entrée du convertisseur ou de la fréquence de fonctionnement du convertisseur, la suppression des filtres passifs dédiés au filtrage de ces harmoniques et une augmentation de la durée de vie de la source.

L'alimentation de puissance peut alimenter une charge à partir d'une source, ou bien charger une source d'énergie telle qu'une batterie à partir d'une charge active, ou bien encore être bidirectionnelle.

Le dispositif de filtrage est caractérisé en ce que le convertisseur de filtrage actif présente au moins un module de filtrage présentant en série depuis une première borne du convertisseur de filtrage une inductance, un premier et un deuxième condensateurs, ainsi qu'un premier et un deuxième interrupteurs commandés en opposition, qui sont disposés entre respectivement une première et une deuxième bornes du deuxième condensateur, et une deuxième borne du convertisseur de filtrage, ainsi qu'un module convertisseur continu-continu commandé à une fréquence de découpage pour maintenir sensiblement constante la tension aux bornes du premier condensateur ($C_0$) et du deuxième condensateur ($C_1$).

Avantageusement, la fréquence de découpage du module convertisseur continu-continu est supérieure ou égale à la fréquence du signal de découpage du convertisseur de puissance, et notamment au moins dix fois supérieure à cette valeur.

Selon une première variante, le module convertisseur continu-continu présente deux convertisseurs continu-continu.

Selon un premier mode de réalisation de cette variante, les deux convertisseurs continu-continu présentent un circuit primaire ayant un pont d'interrupteurs de puissance un transformateur et un circuit secondaire présentant un pont d'interrupteurs de puissance, les interrupteurs de puissance desdits ponts étant commandés par paires en opposition.

Selon un deuxième mode de réalisation de cette variante, les deux convertisseurs continu-continu sont des hacheurs isolés non réversibles connectés aux bornes respectivement des premier et deuxième condensateurs et en ce qu'une résistance est disposée aux bornes de chacun des premier et deuxième condensateurs.

Selon une deuxième variante, le module convertisseur continu-continu présente un convertisseur continu-continu à deux sorties ayant un circuit primaire présentant un pont d'interrupteurs de puissance, un transformateur à deux secondaires et deux circuits secondaires présentant chacun un pont d'interrupteurs de puissance, les interrupteurs des ponts d'interrupteur de puissance étant commandés par paires en opposition.

Le convertisseur de puissance de l'alimentation de puissance peut être d'un type présentant au moins deux étages de conversion de puissance disposés en parallèle.

Dans un premier cas où lesdits étages de puissance sont commandés en synchronisme, le convertisseur de filtrage présente un seul module de filtrage.

Dans un deuxième cas où les convertisseurs de puissance sont commandés de manière entrelacée, avec un décalage temporel des commandes par exemple de $\tau/n$, n désignant le nombre d'étages, et $\tau$ la période de découpage du convertisseur de puissance, le convertisseur de filtrage actif comporte en parallèle ou de préférence en série n modules de filtrage actif dont chacun est commandé en synchronisme avec un étage de conversion de puissance.

L'invention concerne enfin une alimentation de puissance comportant une source ayant un courant de source $i_S$ et une tension $V_E$, un convertisseur de puissance présentant une inductance d'entrée L, un interrupteur de puissance T et délivrant une tension de sortie $V_S$, caractérisée en ce qu'elle comporte un dispositif de filtrage actif tel que défini ci-dessus connecté en parallèle entre des bornes d'entrée (A, B) du convertisseur de puissance.

L'invention sera mieux comprise à la lecture de la description ci-après, en liaison avec les dessins dans lesquels :

- la figure 1 est un schéma de principe de la présente invention ;
- la figure 2 illustre un convertisseur élévateur associé avec un convertisseur de filtrage, la figure 3 représentant la forme d'onde des courants en fonction du temps t ;
- la figure 4 représente un exemple de convertisseur d'alimentation réversible isolé respectivement à deux ponts (figure 4a) et à trois ponts (figure 4b) ;
- la figure 5 illustre une adaptation de la tension à l'aide d'une résistance ;
- la figure 6 est un chronogramme des signaux du convertisseur de la figure 2 (avec $i_L > 0$) ;
- la figure 7 est un chronogramme des différents courants, la figure 8 présente l'allure amplifiée du courant $i_S$ débité par la source, et les figures 9a et 9b le comportement des courants en régime transitoire ;
- la figure 10 est un exemple de convertisseur bidirectionnel en courant (figure 10a) ou de convertisseur destiné à charger une batterie (figure 10b) ;
- la figure 11 est un chronogramme des signaux des convertisseurs pour $i_L < 0$ ;
- les figures 12a et 12b, et 13a et 13b représentent les différents courants avec prise en compte des résistances des inductances et avec modification des références des tensions $U_0$ et $U_1$ dans le cas des figures 13a et 13b ;
- la figure 14 illustre le modèle du hacheur survolteur - filtre actif avec prise en compte des éléments parasites ;
- la figure 15 illustre une structure dite entrelacée à n étages en entrée, la figure 16 étant un chronogramme des signaux pour une structure entrelacée à n = 2 étages avec commande synchrone des interrupteurs ;

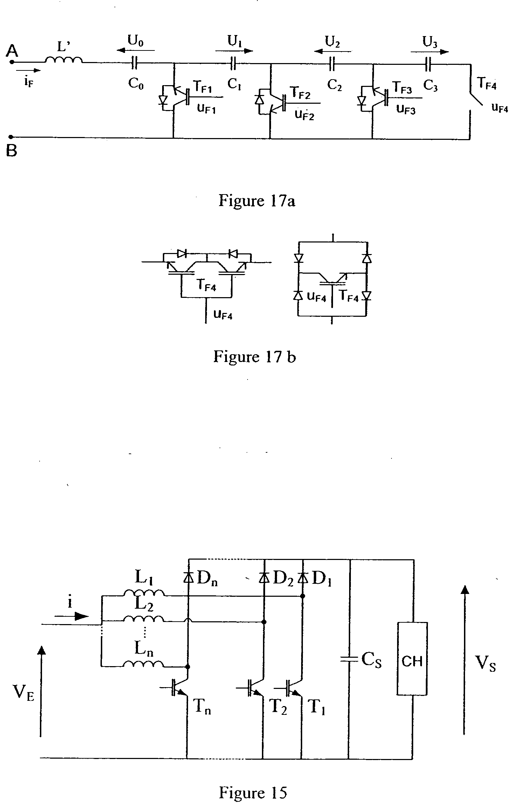

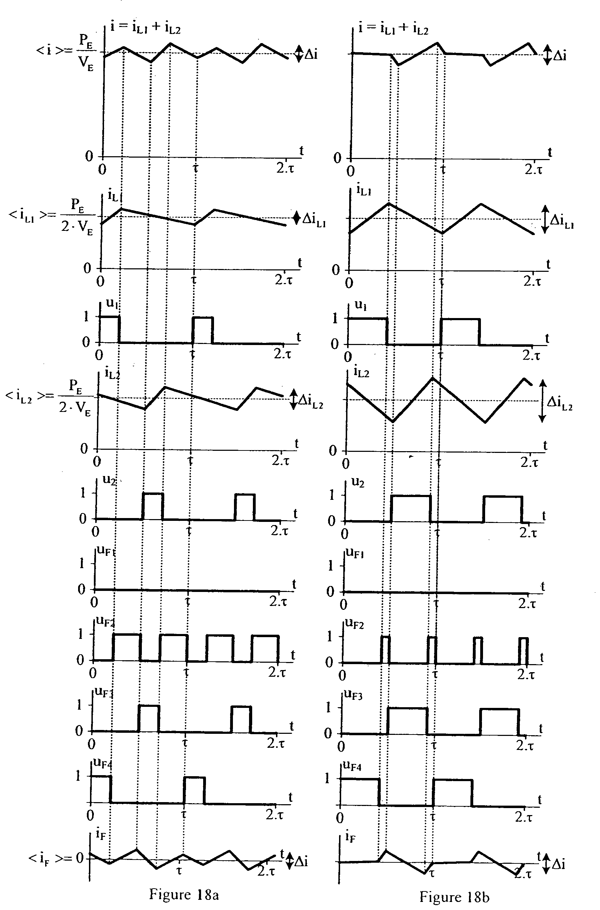

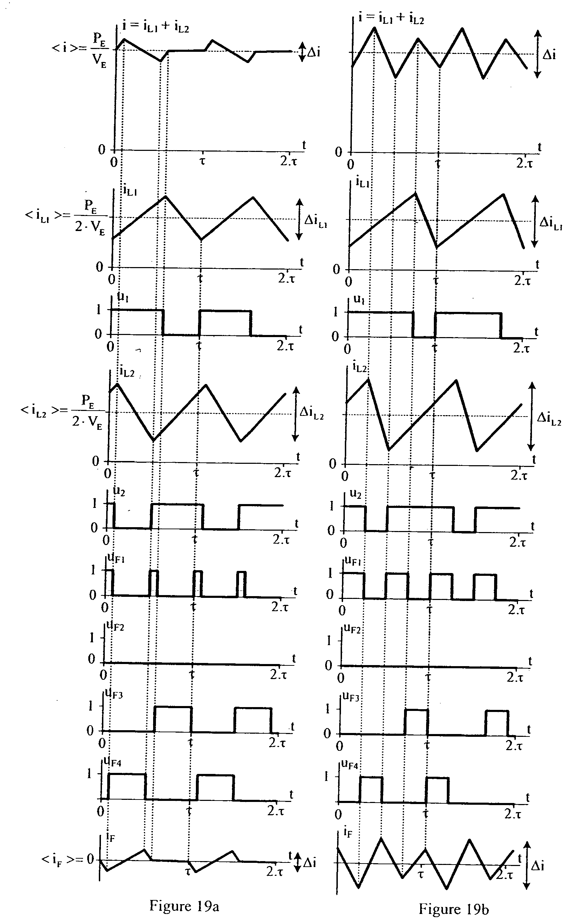

- la figure 17a illustre une structure de filtre actif pour n = 2 et des exemples de réalisation d'un des interrupteurs du filtre (figure 17b), les figures 18a et 18b représentant des chronogrammes des signaux et la commande du filtre pour un rapport cyclique d inférieur à 0,5 et respectivement avec $d < L_2/(L_1 + L_2)$ à la figure 18a et $d > L_2/(L_1 + L_2)$ à la figure 18b avec $L_2 < L_1$, alors que les figures 19a et 19b représentent des chronogrammes des signaux et la commande du filtre pour un rapport cyclique d supérieur à 0,5, respectivement avec $d < L_1/(L_1 + L_2)$ à la figure 19a et $d > L_1/(L_1 + L_2)$ à la figure 19b avec $L_2 < L_1$ ;
- les figures 20a et 20b montrent des variantes du filtre actif pour n = 2 lorsque les inductances $L_1$ et $L_2$ sont de valeurs égales ;
- la figure 21 illustre un convertisseur de charge à deux étages en parallèle en sortie, les figures 22a et 22b représentant la commande des interrupteurs selon que le rapport cyclique d est inférieur à 0,5 (figure 22a) ou supérieur à 0,5 (figure 22b) ;
- la figure 23 est un relevé expérimental du courant dans le convertisseur élévateur, et la figure 24 un relevé expérimental des formes d'ondes de courant avec le filtre actif en marche.

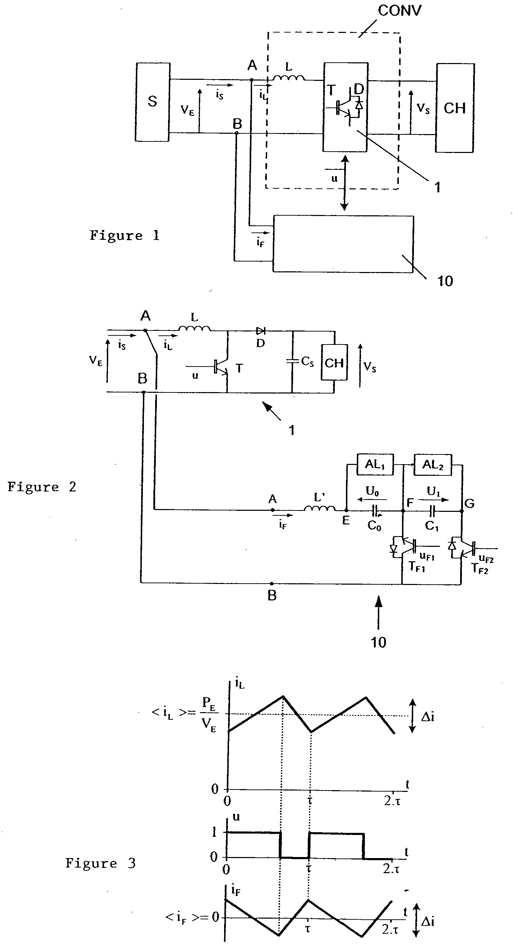

La figure 1 illustre schématiquement l'invention. Un convertisseur de puissance CONV est couplé par ses bornes d'entrée A et B à une source S délivrant un courant $i_S$ et présentant une tension de sortie $V_E$. Le convertisseur CONV présente une inductance d'entrée L et un circuit de commutation 1 alimentant une charge CH.

En parallèle, est connecté aux bornes A et B, un dispositif de filtrage actif 10 qui génère un courant de compensation $i_F$, qui a de préférence une valeur moyenne nulle qui compense au moins en partie et de préférence totalement les variations du courant $i_L$.

La figure 2 représente par exemple la réalisation de l'invention dans le cas d'un convertisseur élévateur 1 qui présente un interrupteur de puissance T commandé par une tension u ayant une période de découpage T et délivrant une tension de sortie $V_S$ à l'anode d'une diode de sortie D où est connectée une capacité $C_S$ filtrant les ondulations de la tension de sortie du convertisseur.

Le dispositif de filtrage actif 10 connecté aux bornes A et B comporte une inductance d'entrée L' et deux condensateurs en série $C_0$ et $C_1$, E désignant la borne commune à L' et $C_0$, F la borne commune à $C_0$ et $C_1$, et G la borne libre de $C_1$. Deux interrupteurs de puissance $TF_1$ et $TF_2$ sont connectés entre respectivement les bornes F et G et la borne B, et ils sont commandés par des tensions $u_{F1}$ et $u_{F2}$ en opposition. Les deux interrupteurs $TF_1$ et $TF_2$ sont représentés par un transistor et une diode en inverse et sont en opposition l'un par rapport à l'autre.

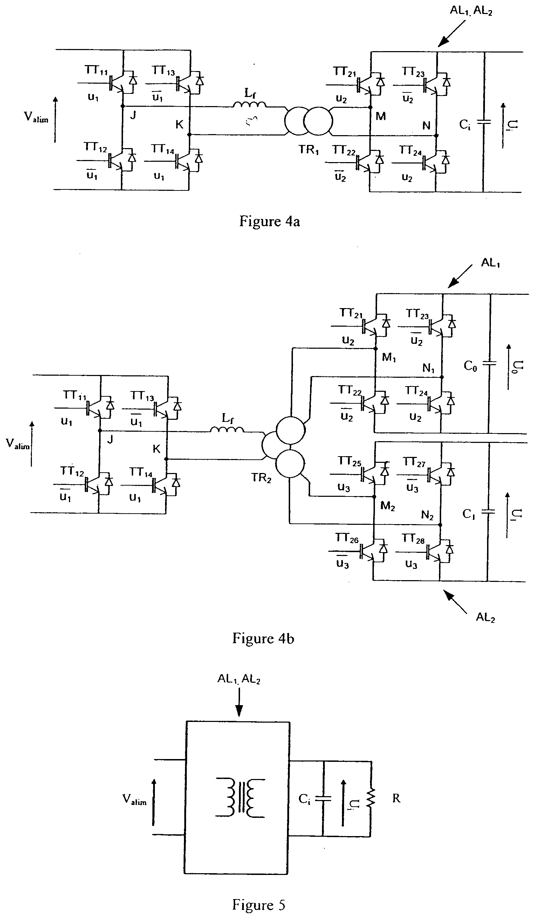

Les tensions $U_0$ et $U_1$ aux bornes de $C_0$ et $C_1$ sont régulées par un module convertisseur continu-continu isolé ayant deux étages $AL_1$ et $AL_2$, imposant respectivement les tensions $U_0$ et $U_1$. Les deux étages AL1 et AL2 sont indépendants (figure 4a) ou bien ils font partie d'un module unique (figure 4b).

Pour réduire les ondulations de courant en entrée du convertisseur, il est connu d'augmenter la fréquence de découpage de l'interrupteur et/ou la valeur de l'inductance L.

Dans la solution proposée, on connecte donc en parallèle un dispositif de filtrage qui est un convertisseur permettant d'absorber un courant $i_F$ de valeur moyenne nulle et dont les ondulations sont opposées à celle du convertisseur de puissance. Un exemple de formes d'onde obtenues pour un convertisseur élévateur classique (tel que celui représenté à la figure 2) fonctionnant en mode de conduction continue est illustré par la figure 3 où $P_E$ est la puissance absorbée par le hacheur élévateur du convertisseur de puissance CONV, et T désigne la période de découpage.

u représente la commande de l'interrupteur commandé T du convertisseur CONV, avec la période de découpage T, et qui sert à piloter les interrupteurs du filtre actif. Celui-ci peut être piloté par tout signal représentatif du découpage du convertisseur CONV, c'est-à-dire synchrone avec le signal u.

Pour u = 1, celui-ci est passant et la tension appliquée aux bornes de l'inductance L est la tension d'alimentation $V_E$ délivrée par la source S. Au blocage de l'interrupteur (u = 0), cette tension devient égale à $V_E$-$V_S$ où $V_S$ est la tension de sortie du hacheur élévateur qui est fourni à la charge CH. Pour compenser complètement les variations du courant $i_L$, il faut que le convertisseur de filtrage absorbe un courant de pente $-\dfrac{V_E}{L}$ pour $u = 1$ et $-\dfrac{V_E - V_S}{L}$ lorsque u = 0.

Pour satisfaire ces deux contraintes, on connecte en parallèle aux bornes A et B le filtre actif 10 (figure 2). L'inductance d'entrée L' est traversée par le courant de compensation $i_F$. Les deux interrupteurs commandés $T_{F1}$ et $T_{F2}$ sont pilotés par les tensions $u_{F1}$ et $u_{F2}$.

Les commandes $u_{F1}$ et $u_{F2}$ sont complémentaires. La présence d'un temps mort est nécessaire pour éviter la mise en court-circuit du condensateur $C_1$ et n'a aucune influence sur les performances du filtrage.

Dans le cas d'un convertisseur élévateur, pour assurer les conditions sur les pentes précédemment citées, c'est-à-dire une compensation exacte, les tensions $U_0$ et $U_1$ sont définies par les relations suivantes :

$$U_0 = \frac{L + L'}{L} \cdot V_E$$
$$U_1 = \frac{L'}{L} \cdot V_S \tag{1}$$

On peut utiliser deux inductances L et L' de valeurs différentes de manière à diminuer les niveaux de tension aux bornes des capacités $C_0$ et $C_1$. Cette propriété permet d'envisager l'utilisation de composants basses tensions dans la structure du filtre actif ainsi qu'une inductance L' de faible valeur. Il est alors facile de réduire le volume du filtre actif et d'améliorer le rendement du dispositif.

Le courant moyen traversant l'inductance L' étant nul, sa taille, son poids et son coût est faible en comparaison avec l'inductance L du circuit de commutation 1 du convertisseur de puissance CONV. De même, les interrupteurs de puissance $TF_1$ et $TF_2$ ont un courant maximal commuté égal à $\dfrac{\Delta i}{2}$, $\Delta i$ désignant l'amplitude crête à crête du courant $i_L$ traversant l'inductance L.

Pour assurer le contrôle des tensions $U_0$ et $U_1$, on connecte les deux condensateurs $C_0$ et $C_1$ aux convertisseurs continu-continu isolés AL1 et AL2. Ces convertisseurs peuvent être de nature réversible ou non réversible. Le choix d'une structure plutôt qu'une autre est conditionné par les pertes tolérées dans le filtre actif. Pour minimiser les pertes dans la structure du filtre actif, les condensateurs $C_0$ et $C_1$ ne doivent pas fournir d'énergie, au sens des valeurs moyennes. Il faut alors utiliser un hacheur isolé réversible pour le contrôle des tensions $U_0$ et $U_1$. La figure 4 donne deux exemples de convertisseur de réglage des tensions $U_0$ et $U_1$. Pour le premier (figure 4a), deux convertisseurs identiques sont nécessaires (un pour chaque condensateur $C_0$ et $C_1$). Pour le deuxième (figure 4b), l'utilisation d'un transformateur $TR_2$ à deux secondaires permet de n'utiliser qu'un seul convertisseur au primaire. La tension $V_{alim}$ est une tension continue quelconque disponible dans le dispositif (batterie auxiliaire ou autre), et peut être notamment la tension $V_S$ en sortie du convertisseur CONV.

A la figure 4a, le convertisseur continu-continu présente au primaire 4 interrupteurs $TT_{11}$ à $TT_{14}$ montés en pont et alimentés par paires par deux tensions en opposition $u_1$ et $\overline{u_1}$. Le pont comporte une première branche comportant les interrupteurs $TT_{11}$ et $TT_{12}$ commandés par $u_1$ et $\overline{u_1}$, une deuxième branche comportant les interrupteurs $TT_{13}$ et $TT_{14}$ commandés par $\overline{u1}$ et $u_1$. Ces deux branches sont alimentées par une tension continue $V_{alim}$ (par exemple $V_S$).

Le point milieu J et K de chacune de ces deux branches attaque le primaire d'un transformateur TR1, dont le secondaire attaque les points milieu M et N d'un pont de 4 interrupteurs $TT_{21}$ à $TT_{24}$ montés en pont de manière similaire aux interrupteurs $TT_{11}$ à $TT_{14}$ et alimentés par paires par deux tensions en opposition $u_2$ et $\overline{u_2}$. En sortie du pont est disposé un condensateur $C_i$, le montage délivrant une tension $U_i$ (avec i = 0 ou 1 - cf. figure 2).

Le montage de la figure 4b est similaire, sauf que le transformateur TR2 a deux secondaires et pilote deux ponts de 4 interrupteurs par leurs points milieux $M_1$, $N_1$ et $M_2$, $N_2$ avec des tensions $u_2$ et $\overline{u_2}$, et $u_3$ et $\overline{u_3}$ pour délivrer les tensions $U_0$ et $U_1$.

Dans le cas où la minimisation des pertes dans le filtre actif n'est pas un objectif prioritaire, il est possible de simplifier la structure en utilisant des hacheurs isolés non réversibles tels que décrits par exemple dans l'ouvrage de J-P. Ferrieux, F. Forest "Alimentation à découpage, convertisseurs à résonance : principes - composants - modélisation" 2° édition MASSON, Paris, 1997, en particulier page 56 ("Flyback"), page 62 ("Forward") et page 70 (montage "Push-Pull"). Il est alors nécessaire de rajouter des résistances aux bornes de chaque condensateur $C_0$ et $C_1$. Lorsque la tension $U_0$ ou $U_1$ doit être diminuée afin de respecter la relation (1), la résistance R en parallèle sur la capacité permet, au prix de pertes Joule, d'adapter la tension (figure 5).

Le contrôle utilisé pour asservir les tensions des sorties $U_0$ et $U_1$ (figure 2) est un contrôle classique. La fréquence de découpage des interrupteurs de puissance utilisés dans les alimentations isolées peut être élevée puisque la puissance délivrée par les condensateurs $C_i$ est quasi nulle (alimentation isolée réversible), ou faible (alimentation isolée non réversible) en régime permanent. Ces propriétés permettent de garantir des propriétés dynamiques en asservissement élevées. La tension $U_i$ va donc pouvoir suivre rapidement l'évolution de sa tension de référence. Le filtre actif peut donc compenser la composante haute fréquence du courant même pendant les régimes transitoires du dispositif de puissance.

Pour garantir une puissance consommée par le filtre actif minimale, il faut garantir une valeur moyenne nulle du courant absorbé. L'annulation de la composante HF requiert une synchronisation entre les signaux de commande du filtre actif et ceux du convertisseur de puissance. Ces deux contraintes sont résolues en utilisant par exemple des régulateurs hybrides de courant par exemple décrits dans les documents suivants :

- Martin, S. Pierfederici, F. Meibody-Tabar, B. Davat
  New Fixed Frequency AC Current Controller for a Single Phase Voltage Source Inverter. IEEE Power Electronics Specialists Conference (PESC'02), 23-27 juin 2002, Cairns (Australie), vol. 2, pp. 909-914.
- S. Pierfederici, J.P. Martin, F. Meibody-Tabar, B. Davat
  Robust fixed frequency control for parallel connected Forward/Buck converters. European Physical Journal Applied Physics, 2003, 24, pp. 121-138.
- A. Lachichi, S. Pierfedirici, J.-P. Martin, B. Davat
  An Hybrid Fixed Frequency Controller suitable for fuel cells applications. IEEE Power Electronics Specialists Conference (PESC'05), June 12 - 15, 2005, Recife (Brazil).

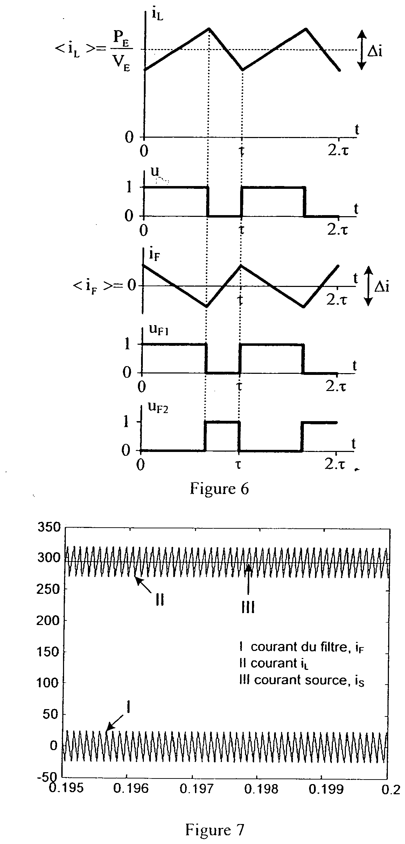

La synchronisation s'effectue grâce à des ordres d'amorçage ou de blocage issus de la commande du convertisseur principal. Un exemple de formes d'onde obtenues en utilisant une synchronisation à l'amorçage est présenté sur la figure 6 ($i_L > 0$). Lorsqu'on détecte un front descendant de u, alors est généré un ordre d'amorçage $u_{F2}$ de l'interrupteur $T_{F2}$. L'ordre de blocage de cet interrupteur peut être donné par la sortie du régulateur de courant du filtre actif qui contrôle la valeur moyenne du courant à zéro.

EXEMPLE (SIMULATION)

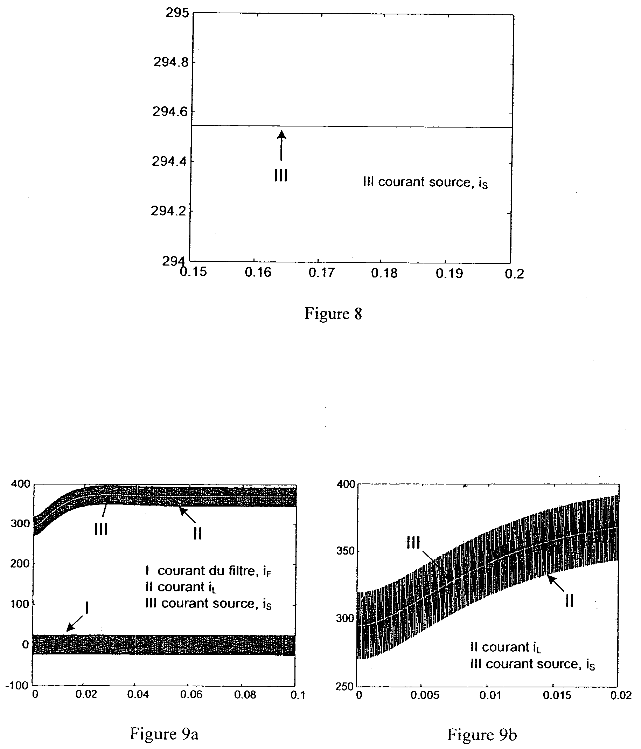

Le hacheur élévateur est contrôlé en mode courant. Sa tension de sortie est asservie à 180 V, la tension d'entrée est fixée à 55 V et la puissance de charge est fixée à 16,2 kW. L'inductance L du convertisseur de puissance et l'inductance L' du filtre actif sont identiques et égales à 77 µH. La structure isolée réversible présentée sur la figure 4a est utilisée pour le contrôle des tensions $U_0$ et $U_1$. Dans un premier temps, les interrupteurs de puissance sont supposés parfaits, les pertes résistives dans les différents éléments du montage (hacheur et filtre actif) sont supposées négligeables. Les tensions aux bornes des condensateurs $C_0$ et $C_1$ sont considérées comme étant parfaitement contrôlées et sont, à tout instant, égales à leur référence. Les différents courants, à savoir le courant du filtre $i_F$, courant $i_L$ du convertisseur de charge, et courant $i_S$ délivré par la source sont représentés sur la figure 7. Avec ces hypothèses, le courant $i_S$ fourni par la source ($i_S = i_L + i_F$) est parfaitement constant (figure 8).

Lors d'un échelon de tension sur la charge CH, comme le montre la figure 9a et l'agrandissement de la zone transitoire de la figure 9b, le filtre actif compense les ondulations de courant absorbées par le hacheur élévateur même en régime transitoire. Le courant de source $i_S$ suit donc l'échelon de tension sur la charge CH sans retransmettre les ondulations de courant dues au hacheur élévateur CONV.

Le dispositif selon l'invention fonctionne également dans le cas d'un convertisseur alimentant la source, ou bien d'un convertisseur bi-directionnel.

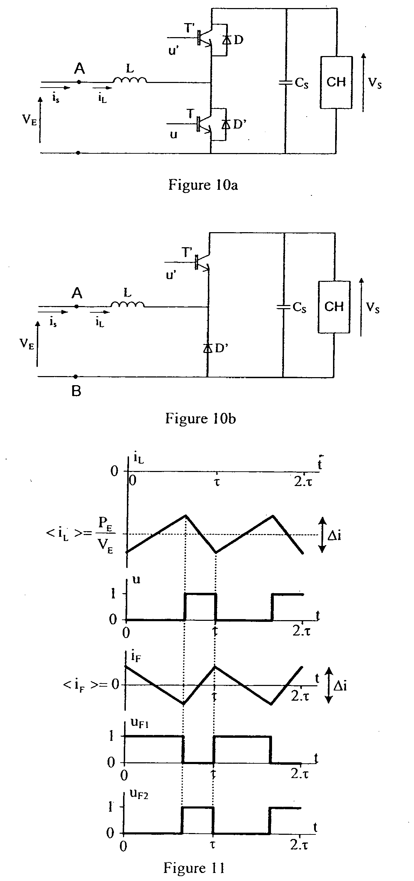

Pour des convertisseurs présentant des séquences de récupération (convertisseur bidirectionnel figure 10a) ou des convertisseurs dédiés à la recharge de batteries (figure 10b), le principe est inchangé, le schéma du filtre actif reste le même et l'on retrouve les formes d'onde de la figure 6, le courant $i_L$ dans l'inductance L' étant maintenant négatif (figure 11).

Un convertisseur bidirectionnel représenté à titre d'exemple à la figure 10a présente, par rapport au convertisseur représenté à la figure 2, un interrupteur supplémentaire T' associé à une diode D' placée en inverse sur l'interrupteur T, la charge CH (jouant le rôle de source pendant les séquences de récupération) étant branchée entre les interrupteurs T et T' en série. L'interrupteur T est commandé pour $i_L > 0$, alors que l'interrupteur T' est commandé pour $i_L < 0$.

Un convertisseur unidirectionnel pour $i_L < 0$, est représenté à la figure 10b. Il comporte uniquement l'interrupteur commandé T' et la diode D'. Dans ce cas, la charge CH joue le rôle de source lors de charge par exemple de batteries.

Pour le dimensionnement des condensateurs $C_i$ du filtre actif, on fait les hypothèses simplificatrices suivantes :

-   La fréquence de découpage des alimentations isolées du filtre actif est largement plus grande que la fréquence des harmoniques de courant à filtrer (par exemple au moins dix fois supérieure) ;
-   L'étude du dimensionnement des condensateurs est réalisée dans le pire des cas. Le courant $i_F$ est supposé traverser tous les condensateurs $C_i$. Cette hypothèse est vraie pour le condensateur $C_0$ et conduit à sur-dimensionner les autres.

La première hypothèse permet de négliger dans le calcul de l'ondulation de tension haute fréquence (due aux découpages) des capacités $C_i$ la composante haute fréquence des courants fournis par les alimentations isolées. La deuxième hypothèse permet de calculer de manière analytique les ondulations de tension aux bornes des condensateurs $C_i$. Dans le cas où le dispositif de puissance correspond à celui de la figure 2, cette expression s'écrit :

$$ C_i \geq \frac{d \cdot (1-d) \cdot V_E}{8 \cdot L' \cdot f^2 \cdot \Delta U_i} \qquad (2) $$

où d est le rapport cyclique, f est la fréquence de découpage du convertisseur CONV et $\Delta U_i$ est l'ondulation de tension due au découpage qui est tolérée. Cette ondulation de tension doit être choisie de manière à être négligeable devant la valeur de la tension moyenne. A titre d'exemple, avec les paramètres suivant : $V_E$ = 55 V, $V_S$ = 180 V, L = L' = 77 $\mu$H, une ondulation de 1% de la tension $U_1$ conduit à une valeur de $C_i \geq$ 170 $\mu$F.

Remarque : Le dimensionnement des condensateurs $C_i$ est indépendant du niveau de courant circulant dans le convertisseur de puissance. Il ne dépend que des tensions mises enjeu dans la structure de puissance.

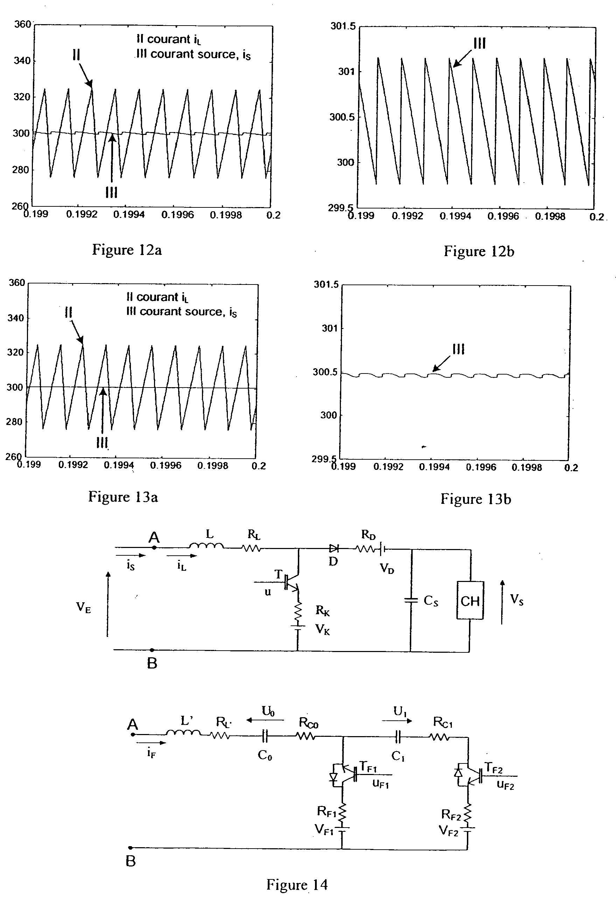

Dans les essais suivants, les simulations prennent en compte les pertes résistives dans les éléments inductifs. Cette fois ci le courant de source $i_S$ présente une légère ondulation (figure 12, courbe III).

Il est possible de tenir compte des chutes de tension dues aux éléments résistifs en modifiant selon la formule (3) ci-dessous les références de tension imposées aux bornes des capacités $C_0$ et $C_1$. La figure 13 montre les résultats obtenus avec cette stratégie selon laquelle on modifie les tensions $U_0$ et $U_1$ selon la formule (3) ci-dessous mais d'une manière simplifiée qui ne tient pas compte des chutes de tension $V_K$, $V_{F1}$ et $V_{F2}$ aux bornes des semi-conducteurs. L'ondulation de courant délivrée par la source est de nouveau très faible.

Il est préférable de tenir compte des chutes de tension aux bornes des semi-conducteurs. De plus, l'estimation des paramètres nécessaires au bon fonctionnement du filtre (notamment la résistance série $R_L$ de l'inductance L) peut se faire par une identification en ligne des paramètres ce qui permettrait d'assurer un fonctionnement idéal même en présence de variations paramétriques (par exemple les variations des résistances en fonction de la température).

Si l'on tient compte de tous les éléments parasites (résistance série $R_D$ et chute de tension en direct de la diode D, résistances $R_L$, $R_{L'}$ des inductances, résistances série $R_{C0}$ et $R_{C1}$ de $C_0$ et $C_1$, résistances $R_K$, $R_{F1}$ et $R_{F2}$ et chutes de tension $V_K$, $V_{F1}$ et $V_{F2}$ à l'état passant des semi-conducteurs des interrupteurs, etc...), on obtient pour le convertisseur élévateur considéré, le schéma équivalent de la figure 14.

Dans ce cas, les tensions de référence deviennent :

$$U_0 = \left(1 + \frac{L'}{L}\right) \cdot V_E - \frac{L'}{L} \cdot \left(R_L + R_K\right) \cdot i_L - \frac{L'}{L} \cdot V_K - \left(R_{C0} + R_{F1} + R_{L'}\right) \cdot i_F - V_{F1}$$

$$\tag{3}$$

$$U_1 = \left(V_D + V_S\right) \cdot \frac{L'}{L} + \left(R_D - R_K\right) \cdot \frac{L'}{L} \cdot i_L - \frac{L'}{L} \cdot V_K + \left(R_{C1} + R_{F2} - R_{F1}\right) \cdot i_F + V_{F2} - V_{F1}$$

Comme indiqué ci-dessus, on peut également réaliser une compensation seulement partielle, notamment en négligeant les chutes de tension $V_K$, $V_{F1}$ et $V_{F2}$.

Le dispositif de filtrage des harmoniques de courant dus au découpage fonctionne avec un courant moyen nul si on souhaite minimiser les pertes. Dans le cas où le courant consommé par l'utilisateur contiendrait à la fois des harmoniques basse fréquence (dus à la charge) et haute fréquence (dus au découpage), il est envisageable de minimiser les harmoniques basse fréquence et d'annuler les harmoniques hautes fréquence comme suit.

Supposons que le courant $i_L$ (figure 14) s'écrit sous la forme :

$$i_L(t) = i_{L0} + i_{L,bf}(t) + i_{L,hf}(t)$$

Où $i_{L0}$, $i_{L,bf}$ et $i_{L,hf}$ représentent respectivement les composantes continue, basse fréquence et haute fréquence du courant consommé par le convertisseur de charge (voir figure 1).

Le contrôle du courant $i_f$ absorbé par le dispositif de filtrage (figure 1) assurera que ce courant est de la forme :

$$i_f(t) = +i_{f,bf}(t) + i_{f,hf}(t) \quad \text{avec} \quad i_{f,bf}(t) = -i_{L,bf}(t) \quad \text{et} \quad i_{f,hf}(t) = -i_{L,hf}(t)$$

où

- $i_{f,hf}(t)$ représente l'ondulation haute fréquence due au découpage (au signe près). Elle est générée automatiquement comme indiqué ci-dessus,
- $i_{f,bf}(t)$ représente la composante basse fréquence du courant à générer par le dispositif de filtrage pour compenser les harmoniques basse fréquence générés par l'utilisateur. Elle est obtenue en utilisant des méthodes classiques de filtrage des harmoniques basses fréquences basées sur des bilans de puissance, et permet ainsi de générer une composante de compensation des harmoniques basse fréquence.

La mise en parallèle de convertisseurs est connue de longue date pour augmenter le courant absorbé par le convertisseur de charge. Des convertisseurs identiques sont placés en parallèle en sortie de la source d'énergie et alimentent la même charge, chaque convertisseur n'étant traversé que par 1/nième du courant total.

Un exemple de structure parallèle à n étages est présenté sur la figure 15. Elle comporte n branches en parallèle dont chacune comporte une inductance $L_1$, $L_2$ .... $L_n$ et un interrupteur commandé $T_1$, $T_2$, ...$T_n$. Les différentes branches sont reliées à la charge par des diodes $D_1$, $D_2$, .... $D_n$. Dans ce type de structure, les commandes peuvent être synchrones (amorçage et blocage simultanés des commandes de tous les interrupteurs de puissance) ou entrelacées (décalage temporel des commandes de $\tau/n$ où n est le nombre de branches en parallèle et T la période de découpage). La technique d'entrelacement permet de réduire les ondulations du courant absorbé sur la source continue. Grâce à la réduction des ondulations de courant, cette méthode permet une diminution de la taille et du poids des filtres d'entrée. Un décalage différent entre les commandes des branches peut être utilisé mais conduit à des performances moindres en l'absence du dispositif de filtrage proposé.

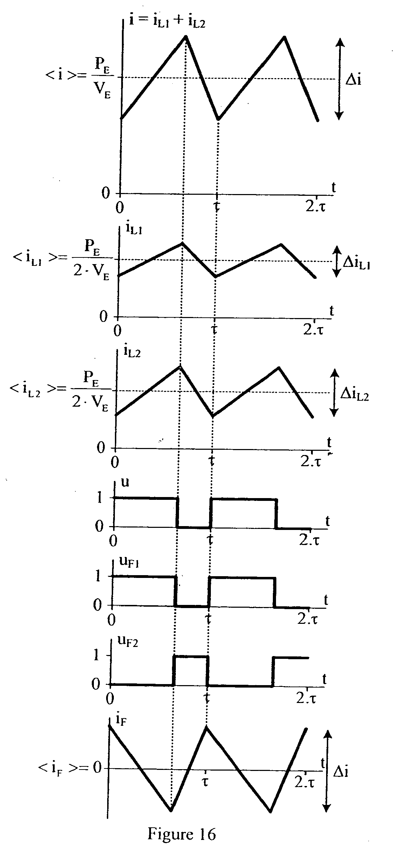

Lorsqu'une commande synchrone des interrupteurs est utilisée, c'est la même commande u qui contrôle les convertisseurs placés en parallèle. Le convertisseur de filtrage 10 présenté sur la figure 2 permet d'annuler les ondulations de courant hautes fréquences. Seules sont modifiées les amplitudes des courants traversant l'inductance de filtrage L' et la valeur des tensions du filtre actif (figure 16).

Les inductances des convertisseurs placés en parallèle peuvent être différentes (volontairement ou pour des raisons de réalisation), la relation définissant les tensions $U_0$ et $U_1$ devenant :

$$U_0 = \left(1 + L' \cdot \sum_{k=1}^{n} \frac{1}{L_k}\right) \cdot V_E$$

$$U_1 = L' \cdot \left(\sum_{k=1}^{n} \frac{1}{L_k}\right) \cdot V_S \tag{4}$$

Lorsqu'une commande entrelacée des interrupteurs est utilisée, le courant crête traversant l'inductance L est plus faible. La méthode de filtrage la plus simple, dans ce cas, consiste à utiliser un filtre actif par branche, chacun filtrant le courant d'un des convertisseurs placés en parallèle, ce qui conduit à placer n filtres actifs en parallèle.

Pour un nombre réduit de branches, un seul convertisseur de filtrage peut également être utilisé en augmentant le nombre de condensateurs. A titre d'exemple, pour un hacheur entrelacé à deux étages (n = 2), la figure 17 donne la structure du filtre actif. Il comporte quatre condensateurs $C_0$, $C_1$, $C_2$ et $C_3$ en série, ayant à leur bornes les tensions $U_0$, $U_1$, $U_2$ et $U_3$, et quatre interrupteurs $T_{F1}$, $T_{F2}$, $T_{F3}$ et $T_{F4}$ commandés par les tensions $u_{F1}$, $u_{F2}$, $u_{F3}$ et $u_{F4}$. L'interrupteur $T_{F4}$ à la différence des trois autres est bidirectionnel en tension et en courant et peut être réalisé, par exemple, selon l'un des schémas de la figure 17b.

Si les inductances $L_1$ et $L_2$ sont différentes, on a quatre intervalles où les pentes du courant total i sont différentes et ce sont quatre tensions $U_0$, $U_1$, $U_2$ et $U_3$ qui sont maintenant nécessaires. Les tensions $U_0$, $U_1$, $U_2$ et $U_3$ sont, comme précédemment, régulées à des valeurs de référence pré-calculées à l'aide d'alimentations isolées réversibles ou non et valent :

$$U_0 = \left(1 + L' \cdot \left(\frac{1}{L_1} + \frac{1}{L_2}\right)\right) \cdot V_E$$

$$U_1 = L' \cdot \left(\frac{1}{L_1} + \frac{1}{L_2}\right) \cdot V_S$$

$$U_2 = \frac{L'}{L_2} \cdot V_S \tag{5}$$

$$U_3 = L' \cdot \left(\frac{1}{L_2} - \frac{1}{L_1}\right) \cdot V_S$$

Ces tensions sont toutes positives si l'on suppose que $L_2 < L_1$ (dans le cas contraire, il suffit de permuter les indices pour les tensions $U_2$ et $U_3$).

Les formes d'onde et les commandes des interrupteurs sont différentes selon la valeur du rapport cyclique (durée relative de conduction de l'interrupteur commandé des convertisseurs de charge). La principale différence dans les commandes intervient selon que celui-ci est inférieur (figure 18) ou supérieur (figure 19) à 0,5. De plus, les formes d'onde présentent des différences selon la valeur du rapport cyclique par rapport aux termes $\frac{L_2}{L_1 + L_2}$ et $\frac{L_1}{L_1 + L_2}$.

Contrairement aux interrupteurs F1, F2 et F3, l'interrupteur F4 doit être réversible en tension et en courant.

Lorsque le rapport cyclique est inférieur à 0,5 seuls sont commandés les interrupteurs $F_2$, $F_3$ et $F_4$. Lorsque le rapport cyclique est supérieur à 0,5, seuls sont commandés les interrupteurs $F_1$, $F_3$ et $F_4$.

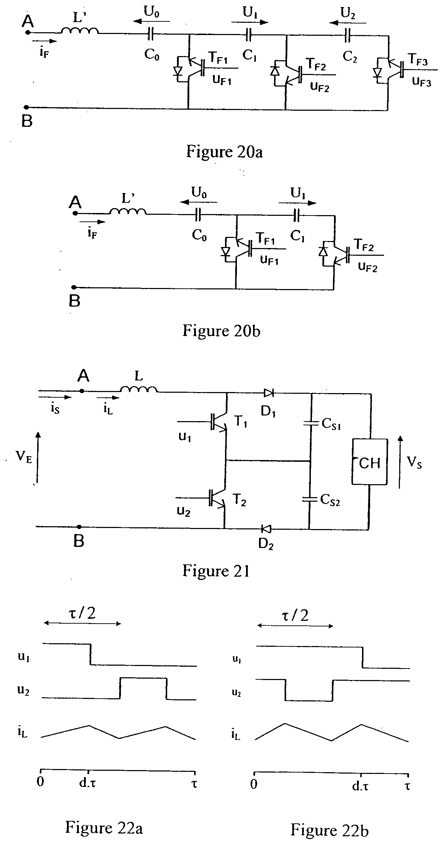

Des simplifications du montage sont possibles si les inductances $L_1$ et $L_2$ sont identiques car alors la tension U3 donnée par la relation 3 précédente est nulle. On peut alors supprimer l'interrupteur $T_{F4}$ et aboutir au schéma de la figure 20a. De plus, il est possible de changer la stratégie de contrôle des tensions afin d'éliminer un des condensateurs et un des interrupteurs pour arriver au schéma de la figure 20b.

Pour n supérieur à 2, le filtrage par un convertisseur unique placé en parallèle n'est plus intéressant. Ce convertisseur nécessite $2^n$ semi-conducteurs et $2^n$ capacités alors qu'un filtre actif individuel par branche conduirait à utiliser 2n semi-conducteurs et 2n capacités.

La mise en parallèle de convertisseurs peut aussi être effectuée côté charge afin de réduire la tension supportée par chaque interrupteur. Dans le cas de convertisseur élévateur, c'est en général deux convertisseurs que l'on place en parallèle afin de réduire la tension supportée par chacun des semi-conducteurs (figure 21).

La tension imposée aux bornes de l'inductance L dépend du motif de conduction des interrupteurs et donc de la valeur du rapport cyclique (figure 22).

Comme il n'y a dans ce cas qu'une inductance L, le schéma du dispositif de filtrage est celui de la figure 2 et le motif de commande des interrupteurs du filtre est inchangé. C'est celui de la figure 6. Par contre, selon la valeur du rapport cyclique, les expressions des tensions $U_0$ et $U_1$ données par la relation (1) sont modifiées.

Si le rapport cyclique est inférieur à 0,5, lorsque $T_1$ ou $T_2$ conduit, la tension aux bornes de l'inductance L est égale à $V_E - \dfrac{V_S}{2}$ et lorsque les deux interrupteurs sont bloqués, celle-ci est égale à $V_E - V_S$. Il s'ensuit que les tensions du dispositif de filtrage valent :

$$U_0 = \frac{L + L'}{L} \cdot V_E - \frac{L'}{L} \cdot \frac{V_S}{2}$$

$$U_1 = \frac{L'}{L} \cdot \frac{V_S}{2} \qquad\qquad (6)$$

Si le rapport cyclique est supérieur à 0,5, lorsque $T_1$ et $T_2$ conduisent, la tension aux bornes de l'inductance L est égale à $V_E$ et lorsque $T_1$ ou $T_2$ conduit elle est égale à $V_E - \dfrac{V_S}{2}$. Les tensions du dispositif de filtrage deviennent alors :

$$U_0 = \frac{L + L'}{L} \cdot V_E$$

$$U_1 = \frac{L'}{L} \cdot \frac{V_S}{2} \qquad\qquad (7)$$

EXEMPLE

La structure adoptée pour le convertisseur de puissance est une structure de type élévateur (figure 2). La structure de puissance a un calibre en courant faible 3A et était destinée à valider le principe de ce filtrage actif.

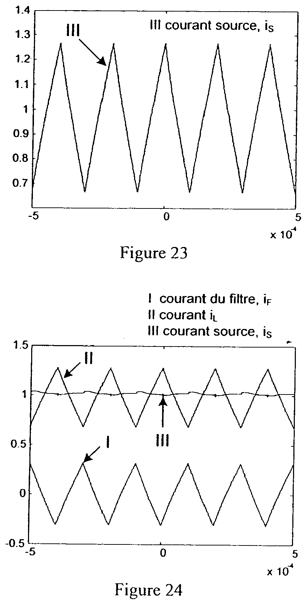

Lorsque seul le convertisseur élévateur est en fonctionnement, le courant $i_S$ débité par la source est représenté sur la figure 23. On retrouve la forme d'onde de courant classique à l'entrée d'un convertisseur élévateur.

Sur la figure 24 sont représentés le courant $i_L$ du convertisseur élévateur et le courant $i_F$ du filtre actif (en bas). Le courant $i_S$ débité par la source est pratiquement constant. A ces niveaux de courant et de tension, il n'est pas souhaitable que les chutes de tension aux bornes des éléments du montage soient négligées. Il est donc préconisé de modifier les tensions $U_0$ et $U_1$ comme indiqué ci-dessus - formule (3) pour tenir compte des éléments parasites, en en négligeant éventuellement certains, comme indiqué précédemment.

**Revendications**

1. Dispositif de filtrage actif pour une alimentation de puissance comportant une source ayant un courant de source $i_S$ et une tension $V_E$, un convertisseur de puissance présentant une inductance d'entrée L, un interrupteur de puissance T commandé par un signal de découpage, et délivrant une tension de sortie Vs, et une charge, comportant un convertisseur de filtrage actif (10) pour générer en sortie un courant de compensation des harmoniques du courant de source dues au découpage, en réponse en entrée à un signal représentatif du découpage du convertisseur de puissance, ledit convertisseur de filtrage actif présente au moins un module de filtrage présentant en série depuis une première borne (A) du convertisseur de filtrage une inductance L', et **caractérisé en ce que** ledit convertisseur de filtrage présente en outre un premier ($C_0$) et un deuxième ($C_1$) condensateurs ainsi qu'un premier ($T_{F1}$) et un deuxième ($T_{F2}$) interrupteurs commandés en opposition, qui sont disposés entre respectivement une première (F) et une deuxième (G) borne du deuxième condensateur, et une deuxième borne (B) du convertisseur de filtrage, ainsi qu'un module convertisseur continu-continu (AL1, AL2) commandé à une fréquence de découpage pour maintenir à leur référence la tension ($U_0$, $U_1$) aux bornes du premier condensateur ($C_0$) et du deuxième condensateur ($C_1$).

2. Dispositif selon la revendication 1, **caractérisé en ce que** le courant de compensation présente une composante de compensation des harmoniques basse fréquence dues à la charge.

3. Dispositif selon une des revendications 1 ou 2, **caractérisé en ce que** l'alimentation de puissance est d'un type alimentant une charge à partir d'une source.

4. Dispositif selon une des revendications 1 ou 2, **caractérisé en ce que** l'alimentation de puissance est un convertisseur pour charger une source d'énergie telle qu'une batterie, à partir d'une charge active.

5. Dispositif selon une des revendications 1 ou 2, **caractérisé en ce que** l'alimentation de puissance est bidirectionnelle.

6. Dispositif selon la revendication 5, **caractérisé en ce que** les tension $U_0$ et $U_1$ aux bornes des premier ($C_0$) et deuxième ($C_1$) condensateurs ont pour valeur :

$$U_0 = V_E (L + L')/L ; \qquad U_1 = V_S L'/L$$

7. Dispositif selon la revendication 5, **caractérisé en ce que** les tensions $U_0$ et $U_1$ aux bornes des premier ($C_0$) et deuxième ($C_1$) condensateurs ont pour valeur :

$$U_0 = U_{01} = V_E (L + L')/L - \frac{L'}{L} (R_L + R_K) i_L - (R_{C0} + R_{F1} + R_{L'})i_F$$

$$U_1 = U_{11} = (V_S + V_D)L'/L + (R_D - R_K) \frac{L'}{L} i_L + (R_{C1} + R_{F2} - R_{F1}) i_F$$

- $R_L$ et $R_{L'}$ désignant respectivement la valeur de la résistance de l'inductance L et de l'inductance L'.
- $R_K$ désignant la résistance équivalente de l'interrupteur de puissance $\tau$
- $R_D$ et $V_D$ désignant respectivement la résistance série et la chute de tension en direct de la diode D de sortie du convertisseur de puissance
- Rco, $R_{C1}$, $R_{F1}$ et $R_{F2}$ désignant la résistance de respectivement les premier et deuxième condensateurs $C_0$ et $C_1$ et des interrupteurs $T_{F1}$ et $T_{F2}$.

8. Dispositif selon la revendication 7, **caractérisé en ce que** les tensions $U_0$ et $U_1$ aux bornes des premier ($C_0$) et deuxième ($C_1$) condensateurs ont pour valeur :

$$U_0 = U_{01} - V_K L'/L - V_{F1}$$

$$U_1 = U_{11} - V_k L'/L + V_{F2} - V_{F1}$$

$U_{01}$ et $U_{11}$ étant tels que définis à la revendication 7
$V_K$, $V_{F1}$ et $V_{F2}$ désignant les chutes de tension aux bornes des interrupteurs T, $T_{F1}$ et $T_{F2}$.

9. Dispositif selon une des revendication 5 à 8, **caractérisé en ce que** la fréquence de découpage du module convertisseur continu-continu est supérieure ou égale à la fréquence du signal de découpage du convertisseur de puissance, et notamment supérieure à dix fois cette dernière.

10. Dispositif selon une des revendications 5 à 8, **caractérisé en ce que** le module convertisseur continu-continu présente deux convertisseurs continu-continu ($AL_1$, $AL_2$).

11. Dispositif selon la revendication 10, **caractérisé en ce que** les deux convertisseurs continu-continu présentent un circuit primaire ayant un pont d'interrupteurs de puissance ($TT_{11}$..... $TT_{14}$) un transformateur ($TR_1$) et un circuit secondaire présentant un pont d'interrupteurs de puissance ($TT_{21}$..... $TT_{24}$), les interrupteurs de puissance ($TT_{11}$.....$TT_{24}$) desdits ponts étant commandés par paires en opposition.

**12.** Dispositif selon la revendication 10, **caractérisé en ce que** les deux convertisseurs continu-continu sont des hacheurs isolés non réversibles connectés aux bornes respectivement des premier ($C_0$) et deuxième ($C_1$) condensateurs et **en ce qu'**une résistance est disposée aux bornes de chacun des premier ($C_0$) et deuxième ($C_1$) condensateurs.

**13.** Dispositif selon une des revendications 5 à 9, **caractérisé en ce qu'**un module convertisseur continu-continu présente un convertisseur continu-continu à deux sorties ayant un circuit primaire présentant un pont d'interrupteurs de puissance ($TT_{11}$..... $TT_{14}$), un transformateur ($TR_2$) à deux secondaires et deux circuits secondaires présentant chacun un pont d'interrupteurs de puissance ($TT_{21}$..... $TT_{24}$) et ($TT_{25}$..... $TT_{28}$), les interrupteurs des ponts d'interrupteur de puissance ($TT_{11}$..... $TT_{28}$) étant commandés par paires en opposition.

**14.** Dispositif selon une des revendications précédentes, **caractérisé en ce que** le convertisseur de puissance (CONV) présente au moins deux étages de conversion de puissance disposés en parallèle.

**15.** Dispositif selon la revendication 14, **caractérisé en ce que** les étages de conversion de puissance sont commandés en synchronisme et **en ce que** le convertisseur de filtrage présente un seul module de filtrage.

**16.** Dispositif selon la revendication 14, **caractérisé en ce que** les étages de conversion de puissance sont commandés de manière entrelacée avec un décalage temporel des commandes par exemple de $\tau$/n, n désignant le nombre d'étages de conversion de puissance en parallèle et $\tau$ la période de découpage du convertisseur de puissance.

**17.** Dispositif selon la revendication 16, **caractérisé en ce que** le convertisseur de filtrage actif comporte en série n modules de filtrage actif dont chacun est commandé en synchronisme avec un étage de conversion de puissance.

**18.** Dispositif selon la revendication 16, **caractérisé en ce que** le convertisseur de filtrage actif comporte en parallèle n modules de filtrage actifs dont chacun est commandé en synchronisme avec un étage de conversion de puissance.

**19.** Alimentation de puissance comportant une source ayant un courant de source $i_S$ et une tension $V_E$, un convertisseur de puissance présentant une inductance d'entrée L, un interrupteur de puissance T et délivrant une tension de sortie Vs, **caractérisé en ce qu'**elle comporte un dispositif de filtrage actif selon une des revendications précédentes connecté en parallèle entre des bornes d'entrée (A, B) du convertisseur de puissance.

## Patentansprüche

**1.** Aktivfilterungsvorrichtung für eine Leistungsversorgung umfassend eine Quelle mit Quellenstrom $i_S$ und einer Spannung $V_E$, einen Stromrichter, der eine Eingangsdrossel L aufweist, einen Leistungsschalter T, der von einem Pulssignal gesteuert wird, und eine Ausgangsspannung $V_S$ abgibt, und eine Ladung, die einen Aktivfilterungswandler (10) aufweist, um am Ausgang einen Kompensationsstrom für durch die Teilung entstehende Oberschwingungen des Quellenstroms zu erzeugen, und zwar als Antwort am Eingang auf ein für die Teilung des Stromrichters stehendes Signal, wobei der Aktivfilterungswandler zumindest ein Filtermodul aufweist, das ab einer ersten Klemme (A) des Filterungswandlers eine in Serie geschaltete Drossel L' aufweist, und **dadurch gekennzeichnet, dass** der Filterungswandler ferner einen ersten ($C_0$) und einen zweiten Kondensator ($C_1$) aufweist, sowie einen ersten ($T_{F1}$) und einen zweiten Schalter ($T_{F2}$), die entgegengesetzt gesteuert werden, die zwischen einer ersten (F) beziehungsweise einer zweiten Klemme (B) des zweiten Kondensators, und einer zweiten Klemme (B) des Filterungswandlers angeordnet sind, sowie ein DC/DC-Wandlermodul (AL1, AL2), das mit einer Pulsfrequenz gesteuert wird, um die Spannung ($U_0$, $U_1$) an den Klemmen des ersten Kondensators ($C_0$) und des zweiten Kondensators ($C_1$) auf ihrem Referenzwert zu halten.

**2.** Vorrichtung nach Anspruch 1, **dadurch gekennzeichnet, dass** der Kompensationsstrom eine Kompensationskomponente für die aufgrund der Ladung niederfrequenten Oberschwingungen aufweist.

**3.** Vorrichtung nach einem der Ansprüche 1 oder 2, **dadurch gekennzeichnet, dass** die Leistungsversorgung von einem Typ ist, der eine Ladung ausgehend von einer Quelle versorgt.

4. Vorrichtung nach einem der Ansprüche 1 oder 2, **dadurch gekennzeichnet, dass** die Leistungsversorgung ein Wandler zum Laden einer Energiequelle, wie ein Akku, ab einer aktiven Ladung ist.

5. Vorrichtung nach einem der Ansprüche 1 oder 2, **dadurch gekennzeichnet, dass** die Leistungsversorgung bidirektional ist.

6. Vorrichtung nach Anspruch 5, **dadurch gekennzeichnet, dass** die Spannungen $U_0$ und $U_1$ an den Klemmen des ersten ($C_0$) und des zweiten ($C_1$) Kondensators den folgenden Wert haben:

$$U_0 = V_E(L + L')/L; \qquad U_1 = V_S \ L'/L$$

7. Vorrichtung nach Anspruch 5, **dadurch gekennzeichnet, dass** die Spannungen $U_0$ et $U_1$ an den Klemmen des ersten ($C_0$) und des zweiten ($C_1$) Kondensators den folgenden Wert haben:

$$U_0 = U_{01} = V_E \ (L + L')/L - \frac{L'}{L} \ (R_L + R_K) \ i_L - (R_{C0} + R_{F1} + R_{L}) i_F$$

$$U_1 = U_{11} = (V_S + V_D)L'/L + (R_D - R_K) \frac{L'}{L} \ i_L + (R_{C1} + R_{F2} - R_{F1}) \ i_F$$

- wobei $R_L$ und $R_L$, den Widerstandswert der Drossel L beziehungsweise der Drossel L' bezeichnen
- wobei $R_K$ den gleichwertigen Widerstand des Leistungsschalters $\tau$ bezeichnet
- wobei $R_D$ und $V_D$ den seriellen Widerstand beziehungsweise den Spannungsabfall direkt ab der Diode D am Ausgang des Stromrichters bezeichnen
- wobei $R_{C0}$, $R_{C1}$, $R_{F1}$ und $R_{F2}$ den Widerstand des ersten beziehungsweise des zweiten Kondensators $C_0$ und $C_1$ und der Schalter $T_{F1}$ und $T_{F2}$ bezeichnen.

8. Vorrichtung nach Anspruch 7, **dadurch gekennzeichnet, dass** die Spannungen $U_0$ et $U_1$ an den Klemmen des ersten ($C_0$) und des zweiten ($C_1$) Kondensators den folgenden Wert haben:

$$U_0 = U_{01} - V_K \ L'/L - V_{F1}$$

$$U_1 = U_{11} - V_K \ L'/L + V_{F2} - V_{F1}$$

wobei $U_{01}$ und $U_{11}$ so sind, wie sie im Anspruch 7 definiert wurden
wobei $V_K$, $V_{F1}$ und $V_{F2}$ die Spannungsabfälle an den Klemmen der Schalter T, $T_{F1}$ und $T_{F2}$ bezeichnen.

9. Vorrichtung nach einem der Ansprüche 5 bis 8, **dadurch gekennzeichnet, dass** die Pulsfrequenz des DC/DC-Wandlermoduls über oder gleich der Frequenz des Pulssignals des Stromrichters, und insbesondere höher als das Zehnfache der Letzteren liegt.

10. Vorrichtung nach einem der Ansprüche 5 bis 8, **dadurch gekennzeichnet, dass** das DC/DC-Wandlermodul zwei DC/DC-Wandler ($AL_1$, $AL_2$) aufweist.

11. Vorrichtung nach Anspruch 10, **dadurch gekennzeichnet, dass** die beiden DC/DC-Wandler einen Primärkreis aufweisen, der eine Leistungsschaltbrücke ($TT_{11}.....TT_{14}$) hat, einen Transformator ($TR_1$) und einen Sekundärkreis, der eine Leistungsschaltbrücke ($TT_{21}..... TT_{24}$) aufweist, wobei die Leistungsschalter ($TT_{11}.....TT_{24}$) der Brücken paarweise entgegengesetzt gesteuert werden.

12. Vorrichtung nach Anspruch 10, **dadurch gekennzeichnet, dass** die beiden DC/DC-Wandler einzelne nicht umkehrbare Hacker sind, die jeweils an die Klemmen des ersten ($C_0$) und des zweiten Kondensators ($C_1$) gelegt sind, und dass ein Widerstand an den Klemmen jedes des ersten ($C_0$) und des zweiten ($C_1$) Kondensators angeordnet sind.

**13.** Vorrichtung nach einem der Ansprüche 5 bis 9, **dadurch gekennzeichnet, dass** ein DC/DC-Wandlermodul einen DC/DC-Wandler mit zwei Ausgängen aufweist, die einen Primärkreis haben, der eine Leistungsschaltbrücke ($TT_{11}.....TT_{14}$), einen Transformator ($TR_2$) mit zwei Sekundärkreisen und zwei Sekundärschaltkreisen aufweisen, die jeweils eine Leistungsschaltbrücke ($TT_{21}.....TT_{24}$) und ($TT_{25}.....TT_{28}$) aufweisen, wobei die Schalter der Leistungsschaltbrücken ($TT_{11}.....TT_{28}$) paarweise entgegengesetzt gesteuert werden.

**14.** Vorrichtung nach einem der vorstehenden Ansprüche, **dadurch gekennzeichnet, dass** der Stromrichter (CONV) zumindest zwei parallel angeordnete Leistungswandlungsstufen aufweist.

**15.** Vorrichtung nach Anspruch 14, **dadurch gekennzeichnet, dass** die Leistungswandlungsstufen synchron gesteuert werden, und dass der Filterungswandler ein einziges Filtermodul aufweist.

**16.** Vorrichtung nach Anspruch 14, **dadurch gekennzeichnet, dass** die Leistungswandlungsstufen verflochten mit einer Zeitverschiebung der Steuerungen zum Beispiel von $\tau/n$ gesteuert werden, wobei n die Anzahl parallele Leistungswandlungsstufen bezeichnet und $\tau$ den Teilungszeitraum des Stromrichters.

**17.** Vorrichtung nach Anspruch 16, **dadurch gekennzeichnet, dass** der Aktivfilterungswandler seriell n Aktivfilterungsmodule umfasst, von denen jedes synchron mit einer Leistungswandlungsstufe gesteuert wird.

**18.** Vorrichtung nach Anspruch 16, **dadurch gekennzeichnet, dass** der Aktivfilterungswandler parallel n Aktivfilterungsmodule umfasst, von denen jedes synchron mit einer Leistungswandlungsstufe gesteuert wird.

**19.** Leistungsversorgung umfassend eine Quelle mit einem Quellenstrom $i_S$ und einer Spannung $V_E$, einem Stromrichter, der eine Eingangsdrossel L, einen Leistungsschalter T aufweist und eine Ausgangsspannung $V_S$, abgibt, **dadurch gekennzeichnet, dass** sie eine Aktivfilterungsvorrichtung nach einem der vorstehenden Ansprüche umfasst, die parallel zwischen den Eingangsklemmen (A, B) des Stromrichters angeschlossen ist.

**Claims**

**1.** An active filter device for a power supply comprising a source having a source current is and a voltage $V_E$, a power converter presenting an input inductor L, a power switch T controlled by a chopper signal and delivering an output voltage $V_S$, and a load, comprising an active filter converter (10) for generating at its output a compensation current of the harmonics of the source current due to the chopping, in response to an input signal representative of the chopping of the power converter, said active filter converter presenting at least one filter module presenting in series from a first terminal (A) of the filter converter an inductor L', and **characterized in that** the active filter converter further presents a first ($C_0$) and a second ($C_1$) capacitors and a first ($T_{F1}$) and a second ($T_{F2}$) switches that are controlled in opposition, that are connected respectively between a first (F) and a second (G) terminal of the second capacitor, and a second terminal (B) of the filter converter, and also a DC-DC converter module ($AL_1$, $AL_2$) controlled at a chopper frequency to maintain at their reference values the voltages ($U_0$, $U_1$) at the terminals of the first capacitor ($C_0$) and of the second capacitor ($C_1$).

**2.** A device according to claim 1, **characterized in that** the compensation current presents a component for compensating low-frequency harmonics due to the load.

**3.** A device according to claim 1 or claim 2, **characterized in that** the power supply is of a type that powers a load from a source.

**4.** A device according to claim 1 or claim 2, **characterized in that** the power supply is a converter for charging an energy source such as a battery from an active load.

**5.** A device according to claim 1 or claim 2, **characterized in that** the power supply is bidirectional.

**6.** A device according to claim 5, **characterized in that** the voltages $U_0$ and $U_1$ at the terminals of the first and second capacitors ($C_0$ and $C_1$) have the following values:

$$U_0 = V_E(L + L')/L \text{ and } U_1 = V_S L'/L$$

**7.** A device according to claim 5, **characterized in that** the voltages $U_0$ and $U_1$ at the terminals of the first and second capacitors ($C_0$ and $C_1$) have the following values:

$$U_0 = U_{01} = V_E(L + L')/L - \frac{L'}{L}(R_L + R_K) \; i_L - (R_{C0} + R_{F1} + R_{L'}) i_F$$

$$U_1 = U_{11} = (V_S + V_D)L'/L + (R_0 - R_K)\frac{L'}{L}i_L + (R_{C1} + R_{F2} - R_{F1}) \; i_F$$

- $R_L$ and $R_{L'}$ designating respectively the resistances of the inductor L and of the inductor L';
- $R_K$ designating in the equivalent resistance of the power switch T;
- $R_D$ and $V_D$ designating respectively the series resistance and the forward voltage drop of the power converter output diode D;
- $R_{C0}$, $R_{C1}$, $R_{F1}$, and $R_{F2}$ designating the resistances respectively of the first and second capacitors $C_0$ and $C_1$ and of the switches $T_{F1}$ and $T_{F2}$.

**8.** A device according to claim 7, **characterized in that** the voltages $U_0$ and $U_1$ at the terminals of the first and second capacitors ($C_0$ and $C_1$) have the following values:

$$U_0 = U_{01} - V_K L'/L - V_{F1},$$

and

$$U_1 = U_{11} - V_K L'/L + V_{F2} - V_{F1}$$

- $U_{01}$ and $U_{11}$ being as defined in claim 8; and
- $V_K$, $V_{F2}$, and $V_{F1}$ designating the voltage drops at the terminals of the switches T, $T_{F1}$, and $T_{F2}$.

**9.** A device according to any one of claims 5 to 8, **characterized in that** the chopper frequency of the DC-DC converter module is greater than or equal to the frequency of the chopper signal of the power converter, and in particular is more than 10 times greater.

**10.** A device according to any one of claims 5 to 8, **characterized in that** the DC-DC converter module presents two DC-DC converters ($AL_1$, $AL_2$).

**11.** A device according to claim 10, **characterized in that** the two DC-DC converters present a primary circuit having a bridge of power switches ($TT_{11}$, ..., $TT_{14}$), a transformer ($TR_1$), and a secondary circuit presenting a bridge of power switches ($TT_{21}$, ..., $TT_{24}$), the power switches ($TT_{11}$, ..., $TT_{24}$) of said bridges being controlled in opposition in pairs.

**12.** A device according to claim 10, **characterized in that** the two DC-DC converters are non-reversible isolated choppers connected to the terminals respectively of the first and second capacitors ($C_0$ and $C_1$), and **in that** a resistor is connected to the terminals of each of the first and second capacitors ($C_0$ and $C_1$).

**13.** A device according to any one of claims 5 to 9, **characterized in that** a DC-DC converter module presents a DC-DC converter with two outputs having a primary circuit presenting a bridge of power switches ($TT_{11}$, ..., $TT_{14}$), a transformer ($TR_2$) having two secondaries, and two secondary circuits, each presenting a respective bridge of power switches ($TT_{21}$, ..., $TT_{24}$) and ($TT_{25}$, ..., $TT_{28}$), the switches of the bridges of power switches ($TT_{11}$, ..., $TT_{28}$) being controlled in opposition in pairs.

**14.** A device according to any preceding claim, **characterized in that** the power converter (CONV) presents at least two power conversion stages connected in parallel.

**15.** A device according to claim 14, **characterized in that** the power conversion stages are controlled synchronously, and **in that** the filter converter presents a single filter module.

**16.** A device according to claim 14, **characterized in that** the power conversion stages are controlled in interlaced manner with a controlled time offset, e.g. of $\tau/n$, where n designates the number of parallel power conversion stages and $\tau$ designates the chopping period of the power converter.

**17.** A device according to claim 16, **characterized in that** the active filter converter comprises n active filter modules in series, each of which is controlled synchronously with a power conversion stage.

**18.** A device according to claim 16, **characterized in that** the active filter converter comprises n active filter modules in parallel, each of which is controlled synchronously with a power conversion stage.

**19.** A power supply comprising a source having a source of current is and a voltage $V_E$, a power converter presenting an input inductor L, a power switch T, and delivering an output voltage $V_S$, the power supply being **characterized in that** it includes an active filter device according to any preceding claim connected in parallel between the input terminals (A, B) of the power converter.

Figure 1

Figure 2

Figure 3

Figure 4a

Figure 4b

Figure 5

$$\langle i_L \rangle = \frac{P_E}{V_E}$$

$i_L$

$\Delta i$

$u$

$i_F$

$\langle i_F \rangle = 0$

$\Delta i$

$u_{F1}$

$u_{F2}$

Figure 6

I courant du filtre, $i_F$
II courant $i_L$
III courant source, $i_S$

Figure 7

Figure 8

Figure 9a

Figure 9b

Figure 10a

Figure 10b

Figure 11

Figure 12a

Figure 12b

Figure 13a

Figure 13b

Figure 14

Figure 16

Figure 17a

Figure 17 b

Figure 15

$< i > = \dfrac{P_E}{V_E}$    $i = i_{L1} + i_{L2}$

$< i_{L1} > = \dfrac{P_E}{2 \cdot V_E}$

$< i_{L2} > = \dfrac{P_E}{2 \cdot V_E}$

$< i_F > = 0$

Figure 18a

$i = i_{L1} + i_{L2}$

Figure 18b

Figure 19a

Figure 19b

Figure 20a

Figure 20b

Figure 21

Figure 22a

Figure 22b

Figure 23

I courant du filtre, i_F
II courant i_L
III courant source, i_S

Figure 24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. C. BENHABIB ; S. SAADATE.** New control approach for four-wire active power filter based on the use of synchronous reference frame. *Electric Power Systems Research,* Mars 2005, vol. 73 (3), 353-362
- **S. SAADATE ; S. H. SHAHALAMI.** Filtrage hybride des harmoniques engendrés par une charge fortement polluante - Application des algorithmes génétiques pour la boucle de contrôle. *Revue Internationale de Génie Electrique,* Avril 2003, vol. 6 (1-2), 143-166
- **R. K. TRIPATHI et al.** High power low distortion switch mode rectifier. *PESC 2001,* Juin 2001, vol. 1, 701-706
- **J-P. FERRIEUX ; F. FOREST.** *Alimentation à découpage, convertisseurs à résonance : principes - composants - modélisation,* 1997, 56

- **MARTIN, S. PIERFEDERICI, F. MEIBODY-TABAR, B. DAVAT.** New Fixed Frequency AC Current Controller for a Single Phase Voltage Source Inverter. *IEEE Power Electronics Specialists Conference (PESC'02),* 23 Juin 2002, vol. 2, 909-914
- **S. PIERFEDERICI, J.P. MARTIN, F. MEIBODY-TABAR, B. DAVAT.** Robust fixed frequency control for parallel connected Forward/Buck converters. *European Physical Journal Applied Physics,* 2003, vol. 24, 121-138
- **A. LACHICHI, S. PIERFEDIRICI, J.-P. MARTIN, B. DAVAT.** An Hybrid Fixed Frequency Controller suitable for fuel cells applications. *IEEE Power Electronics Specialists Conference (PESC'05),* 12 Juin 2005